# EUROPÄISCHE PATENTSCHRIFT

(11) **EP 0 524 920 B1**
(45) Veröffentlichungstag und Bekanntmachung des Hinweises auf die Patenterteilung: **29.05.1996**
(21) Anmeldenummer: 92890168.5
(22) Anmeldetag: 20.07.1992
(51) Int. Cl.: B27N 1/00

(54) **Neuartige Formkörper**
Novel mouldings
Nouveaux objets moules

(30) Priorität: 26.07.1991 AT 1497/91; 13.08.1991 AT 1596/91
(43) Veröffentlichungstag der Anmeldung: 27.01.1993
(73) Patentinhaber: Mundigler, Norbert, Dipl.-Ing. Dr., A-3423 St. Andrä/Wördern (AT); Rettenbacher, Markus, Dipl.-Ing., A-5412 Puch/Salzburg (AT)
(72) Erfinder: Mundigler, Norbert, Dipl.-Ing. Dr., A-3423 St. Andrä/Wördern (AT); Rettenbacher, Markus, Dipl.-Ing., A-5412 Puch/Salzburg (AT)
(74) Vertreter: Brauneiss, Leo, Dipl.Ing.

(56) Entgegenhaltungen:
- EP-A- 0 404 723
- WO-A-90/14935
- NL-C- 44 502

## Beschreibung

Die vorliegende Erfindung betrifft neuartige Formkörper, die als Konstruktions-, Struktur-, Dämm-, Isolier- oder Verpackungselemente für viele Anwendungsgebiete der Technik, des Haushaltes und des Bau- und Transportwesens, als Möbel- und Bauplatten, Paneele aller Art, Gebrauchsartikel, als Trenn-, Wand-, Boden- und Deckenelemente, Bausteine, Bauprofile, Dekorationselemente, Sandwichelemente, Auskleidungen, Formteile u.dgl., auch für kleinere und große Verpackungen wie Behälter, Blister, Folien, "Trays", Schachteln Kisten oder Container, als Stoßdämpf-, Wärmedämm-, Schüttmaterial u.dgl. Einsatz finden können, weiters Verfahren zur Herstellung der neuen Formkörper sowie die Verwendung der sie aufbauenden Komponenten.

Im wesentlichen stellen die neuen, auf Basis biogener und daher biologisch abbaufähiger Komponenten, also umweltfreundlich zu verarbeitende und entsorgbare Formkörper Verbundwerkstoff-Körper dar. Wesentlicher Bestandteil der neuen Formkörper ist eine strukturgebende Matrix auf Basis von Stärke, wobei sie strikte nicht dem Nahrungs- und Genußmittel-Sektor zuzurechnen sind, also allesamt "Non-food"-Artikel und -Produkte darstellen.

Was das Grundmaterial Stärke und damit verwandte bzw. dieselbe enthaltende, meist pflanzliche Rohstoffe betrifft, ist dessen Verarbeitung in einer Vielzahl von Druckschriften beschrieben und wird teilweise auch schon für technische und kommerzielle Zwecke genutzt. So sind z.B. Spritzgieß-, Extrusions- und Heißplattenpreßtechniken bekannt geworden. Alle diese Techniken, wie z.B. auf Basis Spritzguß oder Extrusion, sind solche, die sich auf eine direkte Produktion der oben genannten Formkörper bzw. Artikel in ihrer - von abtragender Formgebung, wie z.B. Schleifen, Zuschneiden od.dgl. abgesehen - endgültigen Gestalt bzw. Form beziehen, indem von einer auf verschiedenste Weise hergestellten, im wesentlichen gestaltlosen Grundmasse ausgehend, direkt der End-Artikel gefertigt wird. Es seien dazu nur stellvertretend die WO-A1 90/14935, die GB-A 2,208.651 oder die US-A 2,649.958 genannt.

Die Erfindung hat sich die Aufgabe gestellt, von dieser die Flexibilität der, insbesondere aus Umweltgründen auf biogenen Grundmassen beruhenden, einschränkenden "Direkt-Technik:" abzugehen und eine für diese technischen Produkte und deren Herstellung neue Technik zu schaffen und anzuwenden, die es gestattet, von einem leicht manipulier-, transportier- und lagerbaren, seine innere Endgrundstruktur in wesentlichen Zügen schon aufweisenden Zwischen- bzw. Grundprodukt auf biogener Basis ausgehend, mit einfach durchführ- und steuerbaren Finalisierungs-Vorgängen ganz gezielt Formkörper mit jeweils gewünschter Endgestaltung und vorherbestimmter technischer und umwelttechnisch vertretbarer Qualität - wenn möglich auf an sich bekannten und oft schon vorhandenen Anlagen mit in ihren Grundzügen (z.B. vom heute noch führenden Polystyrolsektor) vertrauten Techniken - zu produzieren.

Gegenstand der vorliegenden Erfindung ist somit ein Formkörper für Konstruktion, Isolierung und Verpackung auf Basis von biogenen, biologisch abbaubaren Werkstoffen mit Stärke bzw. stärkehaltigem Material, und ein Verfahren zu seiner Herstellung, wie in den Ansprüchen 1 und 17 angegeben.

Die neuen, durch aufbauenden Verbund kleiner Vor-Formkörper - in den meisten Fällen auch unter zumindest geringer Gestaltsänderung derselben - erhältlichen Formkörper für technische-, Gebrauchs-, Dekor- oder ästhetische Zwecke haben ein breites Anwendungsgebiet, wobei auf die eingangs angeführten Einsatz- und Verwendungsgebiete, die eine nur unvollständige Übersicht darstellen, hingewiesen sei. Nur weiter ergänzend seien Füllungen für Kühlbehälter, Lern- und Spielzeugartikel, Elemente und Platten für Innenausbau, Einrichtung, Verkleidung und Verzierung, Formkörper für den Fahrzeugbau in weitestem Sinne, wie z.B. Armaturenbretter, Füllungs-, Dämmungselemente u.dgl., genannt. Unter Stärke sind alle im wesentlichen aus Pflanzen oder deren Teilen, wie Stengeln, Halmen, Stämmen u.dgl. isolierten Stärken, physikalisch oder chemisch veränderte Stärken verschiedenster Provenienz und Konsistenz und hochstärkehaltige Mehle zu verstehen. Mit "Stärkematerial" sind feinteilige stärkehaltige Pflanzenteile, wie insbesondere Früchte, Knollen, Körner und Samen, also Zerealien, gemeint. Dazu gehören insbesondere verschiedene Getreide, wie Reis oder Mais in im wesentlichen nativer Form.

Besonderer Vorteil der neuen Produkte ist, daß sie zumindest zu wesentlichen Anteilen dem Naturkreislauf entnommen und nach Nutzung und Gebrauch infolge biogener Herkunft ihrer Grundkomponenten und der daraus resultierenden Bio-Abbaubarkeit wieder in den genannten Kreislauf recycliert werden können. Damit kann ein ganz wesentlicher Beitrag zur Reduktion des Abfalles und damit zur Umweltverträglichkeit geleistet werden.

Weiterer, insbesondere technischer und ökonomischer Vorteil der neuen Formkörper liegt in einer billigen Produktion einer Großzahl von untereinander im wesentlichen identischen Vor-Formkörpern und deren mit einfachen Mitteln ohne hohen technischen Aufwand erfolgenden Verbund zu praktisch frei wählbare Gestalt und Dimension aufweisenden Formkörpern.

Vorteilhaft ist weiters die Weiternutzung von in der Produktion von synthetischen Schaumstoffkörpern üblichen und ausgereiften Techniken und Anlagen.

Ganz besonders hervorzuheben ist die hohe Flexibilität der Eigenschaften und Erscheinungsformen der neuen, auf Basis von Poren aufweisenden Stärkegelen aufgebauten Verbundkörper. Dies betrifft insbesondere die einerseits durch die überwiegend geschlossenporigen Vor-Formkörper selbst bedingte niedere Dichte mit großer Variationsbreite, weiters das Ausmaß der Kompaktierung der Vor-Formkörper bei deren Verbund, die, beginnend von fast identisch mit deren loser Schütt-Dichte, also hohem Zwischenkornvolumen - d.h. tatsächlich fast punktueller Bindung - bis hin zu "dichter" Packung der selbst Poren aufweisenden Vor-Formkörpern praktisch ohne Zwischenräume zwischen den Körnern, also im wesentlichen Identität von Gesamt-Verbundflächen der Vor-Formkörper mit deren Oberfläche im freien Zustand insgesamt reichen kann.

Variabel von plastoelastisch über elastoplastisch nachgiebig mit oder ohne Rückstelleigenschaften bis struktursteif und rigid, duktil bis spröd, können die mechanischen Eigenschaften genau auf einen jeweiligen Einsatzzweck gezielt eingestellt sein, worauf später noch im einzelnen eingegangen werden wird.

In entsprechender Weise lassen sich auch Aussehen und Oberflächenbeschaffenheit in breitem Rahmen steuern.

Im Hinblick auf Erhöhung der mechanischen Festigkeit und Stabilität gegen Stoß, Schlag, Korrosion und Feuchte hat es sich als den neuen Formkörpern keineswegs abträglich erwiesen, wenn sie mit Vor-Formkörpern, deren die Poren einschließenden Stärkegel-Matrix mit Armierungsmitteln mit Faserstruktur, die oft auch schon die sie aufbauenden Moleküle auszeichnet, auszustatten, wie dies beim neuen Formkörper in einer Ausführungsvariante gemäß **Anspruch 2** der Fall ist.

Als Beispiele für derartige Faserarmierungen seien Pflanzen- und Tierfasern und Haare, synthetische textile und technische Fasern, wie Glas-und Mineralwollen, aber auch gegebenenfalls Kohlenstoff-, Bor-, Keramik-und Metallfasern oder -whiskers genannt. Üblicherweise werden relativ kurze Fasern, also Stapelfasern, zum Einsatz gelangen. Üblicherweise sind, soweit möglich, die Fasern in dem Stärkegel gleichmäßig verteilt. Was nun die Verwendung der neuen Formkörper für Strukturelemente der verschiedensten Art, also insbesondere für Trenn-, Wand-, Decken-, Bodenelemente und -platten, Möbelbau- und Innenausbau-, Fahrzeugbauelemente und -platten, also für Zwecke betrifft, wo auf mechanische Festigkeit bei Struktursteifheit und Verzugsarmut oder -freiheit besonderer Wert gelegt ist, und den Einsatz der Formkörper für Dämm- und Isolierzwecke, wo hohe Porigkeit, selbsttragende Steifigkeit und leichte Manipulierbarkeit bei Transport, Zuschnitt und Befestigung besonders gefordert sind, haben sich Formkörper der im **Anspruch 3** festgelegten Art mit einer mit Pflanzenfasern ausgestatteten Stärkematrix als besonders günstig erwiesen.

Bei dieser Art der Formkörper kommt der ökologische Vorteil besonders zum Tragen, der darin besteht, daß sowohl die strukturgebende Matrix auf Stärkebasis als auch die Füllstoff darstellende oder strukturverfestigende Faser-Armierung biogener Herkunft und daher letztlich als Abfall problemlos biologisch wieder abbaubar sind. Bei Einsatz von auf Zerealien beruhenden Vor-Formkörpern kann die Pflanzenfaser-Komponente schon von vorneherein in der Stärkematrix vorhanden sein.

Ganz besonders eignen sich Formkörper gemäß **Anspruch 3** für Möbelplatten aller Art, Innenausbauplatten, Trennwandplatten, Türblätter u.dgl. Elemente mit rigider Beschaffenheit, wenn die Matrix mit Holzschnitzeln gefüllt ist, und für Wärme-, Schall-, Dämm- und -Isolierelemente, -platten u.dgl., die auch "nachgiebig" sein können, wenn die Grundmatrix mit, vorteilhaft recyclierten, Karton-, Pappe- oder Papierfasern bzw. -teilchen ausgerüstet ist.

Den jeweiligen Anforderungen entsprechend kann der Anteil des pflanzlichen Fasermaterials in der Stärkematrix den im **Anspruch 4** festgehaltenen Bereich umfassen, besonders bevorzugt ist ein Bereich von etwa 15 - 70 Masse-%.

Für einen im wesentlichen anderen Bereich, insbesondere für den Bausektor und Innenausbau, sind neue Formkörper der von **Anspruch 5** umfaßten Art hervorragend geeignet. Es seien dazu nur Dachausbauplatten, Wand- und Deckenelemente, Auskleidungen, Naßzellen u.dgl. genannt, wobei die obengenannten Formkörper bzw. Platten vorteilhaft auch in Kombination mit in den **Ansprüchen 2-4** beschriebenen Homogen- und Dämmelementen und -platten, z.B. zu Verbund- oder Sandwichelemente oder -platten verbunden sein können, womit eine synergistische, vom Brandverhalten her günstige Kombination von Trage- und Isolierfunktionen erreicht werden kann.

Durch die gezielte Kombination von Stärkegel bzw. Stärkeschmelze und dem dort enthaltenen Wasser, das seinerseits das Abbinden der genannten hydraulischen Bindemittel, von denen Gips als billiges Produkt der Entschwefelung von Rauchgasen besonders bevorzugt ist, bewirkt, wird ein nach Erstarren in seiner Struktur hochkomplexer Bauteil mit geringer Dichte bei unerwartet hoher Festigkeit erzielt.

Eine Verrottbarkeit ist selbst noch bei hohen Füllgraden gegeben, da es letztlich zu einem pulvrigen Zerfall der bindemittelverstärkten Stärkematrix kommt.
Allein oder in jeder sinnvollen Kombination ist es zur Veränderung und Modifikation der Stärkematrix besonders günstig, in dieselbe die in **Anspruch 6** gennanten Zusätze bzw. Modifikatoren einzubauen.

Besonders bevorzugt, insbesondere für Verpackungs- und Isolierartikel und -elemente, bei welchen Wärmeflußhemmung und hohe mechanische Dämpfung im Vordergrund stehen, und die daraus gefertigten Formkörper (die nicht nur als Behälter oder Schachteln vorliegen oder der Gestalt eines Gutes angepaßte Formgebung aufweisen müssen, sondern auch als Füllmaterial-Chips, -Sättel od.dgl. vorliegen können) haben weiche, plastoelastische oder elastische Charakteristik mit jeweils steuerbarer Rückstellkraft.

Bevorzugt sind dabei insbesondere thermoplastische Elastomere, wie z.B. solche auf Basis von Styrol und Dienen bzw. Polyenen, wie lineare Copolymere auf Basis von Styrol bzw. Methylstyrol mit Butadien, Isopren oder Ethylbutylen. Als hervorragend auch im Hinblick auf Verrottung, haben sich natürliche Kautschuke und Latices erwiesen, da es offenbar bei der Gel-Bildung bei erhöhter Temperatur durch das Einarbeiten des thermoplastischen Elastomers zu Van der Waals-Brücken und -Bindungen zwischen den Stärke- und den Elastomermolekülen kommt.

Wenn, wie gemäß **Anspruch 7** vorgesehen, eine Ausführungsvariante der erfindungsgemäßen Formkörper mit durch Teilen eines extrudierten porösen Stranges des gegebenenfalls Zusätze und/oder Zuschläge der oben erläuterten Art enthaltenden Stärkegels bzw. der Stärkeschmelze gewählt wird, ist der Vorteil einer großer Flexibilität und jeweils spezifisch anwendungsorientierten Qualitätssteuerung bei guter Dimensionsstabilität und -reproduzierbarkeit gegeben. Direkt expandierter Reis ist besonders bevorzugt.

Größeren Anlagen- und Verfahrensaufwand, jedoch bei Erreichung echt stoffschlüssiger, integraler Bindung der Vor-Formkörper aneinander erfordern die besonders bevorzugten, weil sehr stabilen, strapazfähigen und kaum zu Desintegration neigenden Formkörper gemäß **Anspruch 8**. Üblicherweise finden dafür beheizbare, fluidbeschickbare Preß-Formgebungswerkzeuge Einsatz, da damit ein gleichmäßiges Aufschmelzen bzw. Gelatisieren der Oberflächenschicht der Vor-Formkörper in im wesentlichen einheitlicher Erweichungsschichtdicke erreicht wird.

In diesem Sinne sind die nach den speziellen, im **Anspruch 9** beschriebenen, an den fertigen Form-Körpern objektiv nachweisbaren Techniken zur eigenmaterialschlüssigen, beim praktischen Gebrauch nicht mehr lösbaren Bindung der Vor-Formkörper aneinander zum Aufbau der neuen Form-körper mit Sinterstruktur besonders zu bevorzugen.

Wenn als Folge der gewählten Produktionsbedingungen die neuen Formkörper in einer weiteren vorteilhaften Ausbildungsvariante gemäß **Anspruch 10** vorliegen, ist einerseits eine hohe Stabilität der Bindung der Vor-Formkörper aneinander und andererseits eine Steuerung der Zwischenkorn-Volumina möglich, wobei bei gleichbleibender Masse der Vor-Formkörper selbst, durch deren Aneinanderpressen durch äußere Krafteinwirkung oder durch Eigenexpansion der Vor-Formkörper, z.B. Pellets oder Granulatpartikel, in einer vorgegebenen Form eine bis zu 100%-ige Bindung derselben ohne Interstitialräume erreicht werden kann. Dabei ist die fluidpermeable, durch die Partikelzwischenräume bedingte "Porigkeit" von der meist geschlossenzelligen, volumserweiterten Porigkeit der dann selbst dicht aneinanderliegenden Vor-Formkörper ersetzt. Es lassen sich also damit die Verhältnisse zwischen geschlossenzelligem und "offenzelligem" Porenraum der neuen Verbund-Formkörper gezielt steuern, was gerade bei einer Matrix auf Basis von Stärkematerial wichtig ist und die Variabilität der Einsatzmöglichkeiten erhöht.

Für jeden gewöhnlichen Einsatz und Gebrauch, begonnen von einer Bau-oder Möbelplatte auf Basis von stärkegebundenen Holzschnitzeln mit herabgesetzter Dichte bis zu einer Isolierfolie, beispielsweise für Untertapeten, sind Formkörper gemäß **Anspruch 11** vorteilhaft einsetzbar, wobei Produktion und Lagerhaltung der Vor-Formkörper, da nur eine Sorte und Dimension für eine Art von Formkörpern benötigt wird, einfach sind. Auch die Festigkeit derartiger Formkörper ist für üblichen Einsatz völlig ausreichend.

Für spezielle Zwecke bei Forderung nach erhöhter Festigkeit bei herabgesetzter "Zwischenraum-Permeabilität" und dennoch geringer Dichte ist es besonders günstig, die neuen Formkörper gemäß **Anspruch 12** auszubilden. Dabei ist schon vor dem Zusammenkleben bzw. -sintern und der damit verbundenen Verkleinerung der Vor-Formkörperzwischenräume eine Auffüllung der zwischen den größeren Vor-Formkörpern vorliegenden Zwischenräume mit den Vor-Formkörpern der kleineren Dimension(en) gegeben.

Aus ökonomischen Gründen genügen in den meisten Fällen Formkörper mit nur zwei verschiedenen Korngrößen der sie bildenden Vor-Formkörper den an sie gestellten, erhöhten Anforderungen.

Bei den Formkörpern in den beiden soeben erläuterten, speziellen Ausführungsformen sind die verschieden großen Vor-Formkörper im wesentlichen homogen über das Volumen des von ihnen gebildeten Formkörpers verteilt.

Der Erreichung eines Sandwich-Effektes, also weiter verbesserter Stabilität der "leichten" Formkörper, kann eine Ausführungsform derselben gemäß **Anspruch 13** besonders dienlich sein, wobei eine Art "Rinden"-Effekt auch erhöhten Gebrauchs-Beanspruchungs-Standard gewährleistet.

Für extremere Beanspruchung und Strapaz sind bei gleichzeitiger geringer Dichte und hoher Gesamtfestigkeit neue Formkörper besonders geeignet, wie sie von **Anspruch 14** umrissen sind. Bei diesen Formkörpern ist eine praktisch permeationsdichte Außenhaut bzw. Außenschicht vorhanden, sodaß eine durchaus in ihrem Inneren vorhandene, durch die Vor-Formkörper-Zwischenräume bedingte Durchlässigkeit für fluide Medien, die vorteilhaft zur geringen Dichte beiträgt, nicht zum Tragen kommt.

Besonderer Vorteil der "dichten" Außenhaut ist deren glatte Beschaffenheit, deren direkter Finalisierung, z.B. durch Folien- oder Lackauftrag, ohne Nacharbeit, wie Schleifen od.dgl., nichts im Wege steht.

Besonders hohen Anforderungen an seine Oberflächenbeschaffenheit kann ein Formkörper der beschriebenen Art dann genügen, wenn er in der vom **Anspruch 15** umrissenen Weise mit an seine Oberfläche gebundenen "Fremd"-Materialien beschichtet ist.

Je nach geforderten Eigenschaften sind erfindungsgemäße Formkörper bevorzugt, welche bei den im **Anspruch 16** genannten Dichten etwa die dort ebenfalls angeführten Festigkeitswerte aufweisen. Es soll darauf verwiesen werden, daß diese Werte eher für Strukturelemente als für reine Dämmelemente oder Verpackungshilfen gelten.

Gegenstand der Erfindung sind weiters Verfahren zur Herstellung der neuen Formkörper.

Dabei wird in der Weise vorgegangen, wie dies **Anspruch 17** erläutert. Es sei dazu festgehalten, daß beim Herstellen der porigen Vor-Formkörper jeweils bekannte oder neue Verfahren zur Einbringung von Poren in ein fließfähiges, höherviskoses Medium - hier also in eine Stärke-Schmelze bzw. in ein Stärkegel angewandt werden können.

Besonders vorteilhafte Methoden zur Versetzung der vorgefertigten Formkörper, die etwa zylindrische, sphärische, Pellet- oder Vieleck-Formen aufweisen können und günstigerweise als leicht schüttfähiges Granulat vorliegen, in einen klebrigen bzw. sinterfähigen Zustand sind im **Anspruch 18** zusammengefaßt.

Dabei sind den "Fremd"-Klebemitteln praktisch kaum Grenzen gesetzt - abgesehen von Wirtschaftlichkeits-und Umweltsüberlegungen - wobei ein Abbinden, Festwerden oder Vernetzen des Klebers gefordert ist, das durch einen Gasstrom oder Wärme zur Entfernung eines Lösungsmittels oder durch Chemikalien zur Vernetzung gefördert werden kann. Die Vorbereitung zum "Sintern", also das "Anlösen" bzw. "Anquellen" der Außenschichten der Vor-Formkörper kann gleich in der Form durch dort eingebrachten Dampf oder meist dampfhältige Heißluft, aber auch durch Besprühen mit Wasser und/oder Glykol, Glycerin od.dgl., erfolgen, wobei vorteilhafterweise gleichzeitig eine Expansion der Vor-Formkörper innerhalb der Form oder zugleich eine Druckeinwirkung auf die jeweilige Gesamtheit der Vor-Formpartikel zu deren Aneinanderbindung erfolgt.

Insbesondere zur Herstellung von Paneelen und Möbelplatten, Trenn-und Wandelementen sowie Dämm- und Isolierplatten hat sich das von **Anspruch 19** umfaßte Verfahren als besonders effektiv erwiesen. Die Herstellung der hier eingesetzten Vor-Formkörper auf Stärke- und Faserbasis ist in ihren Grundzügen in der WO-A 90/14935 beschrieben.

Um sowohl bei klebender, aber insbesondere bei sinternder Aneinanderbindung der Vor-Formkörper die nötige Wärmezufuhr homogen durch deren Schüttung zu gewährleisten, sind die Verfahrensweisen gemäß **Anspruch 20** von besonderem Vorteil, da sie eine Durch-und-Durch-Erwärmung, die insbesondere bei Unterstützung der Aneinanderbindung der Vor-Formkörper durch deren (sekundäre) Eigenexpansion wichtig ist, gewährleisten. Ausgenutzt wird bei dieser Art der Erwärmung der Dipol-Charakter der Komponenten der Vor-Formkörper.

Der besondere Vorteil eines Vorgehens gemäß **Anspruch 21** besteht darin, daß während des Bindevorgangs, also gleichzeitig mit demselben, das Anquellen bzw. Klebrigmachen der Außenschicht der Vor-Formkörper erfolgt, wobei eine genaue Steuerung der Dicke der Anquell-Schicht und Nachjustierung des Anlösens noch während des Aneinandersinterns durch Konditionierung der Heißluft mit Wasserdampf, sei es unter Eigenexpansion der Vor-Formkörper oder unter Druckeinwirkung auf dieselben, erfolgen kann.

Die hier anzuwendenden Techniken sind an sich in wesentlichen Zügen aus der Styropor-Erzeugung geläufig.

### Beispiel 1:

Ein Granulat aus Holzspänen, mittlere Partikelgröße 3,5 mm, Maismehl und einem Hydrophobierungsmittel auf Silikonbasis (Massenverhältnis 25 Masse-%: 74,2 Masse-%: 0,8 Masse-%) mit einem Schüttgewicht von 150 kg/m³ soll zu einer Platte mit der Größe 80 cm x 80 cm x 8 cm verpreßt werden.

14,3 kg zylindrischen Granulats, dessen strukturfeste, Porenstruktur aufweisende Partikel eine Länge von 15 mm und einen Durchmesser von 7 mm aufweisen, werden in einem Mischer mit 2,3 kg Wasser, das mittels Düse fein verteilt wird, oberflächlich angefeuchtet. Das so erhaltene, angefeuchtete, sonst aber strukturfest gebliebene Granulat, wird in einen Rahmen, welcher der endgültigen Form der zu produzierenden Platte entspricht, eingeschüttet, wobei unter Berücksichtigung des höheren Schüttvolumens des Granulates gegenüber der fertigen Platte mit einer dann höherer Dichte für ein Überstehen des Granulates über die Höhe des Rahmens um etwa 5,5 cm gesorgt wird.

Der befüllte Rahmen mit Boden wird in eine beheizbare Presse eingelegt und nach Absenken des Preßstempels bei 160°C Preßtemperatur 2 min lang gepreßt. Die Limitierung der Presse erfolgt nicht über den Preßdruck, sondern über die Rahmen-Dicke, wodurch die Dickendimension der Platte genau eingestellt ist. Nach 2 min wird entformt und die jetzt schon strukturfeste, Enddimensionierung aufweisende Platte wird von überschüssiger Feuchtigkeit durch kurze Heißluft-Trocknung befreit.

Die so erhaltene Platte hat eine Dichte von 280 kg/m³, ist gegen mechanische Einwirkung widerstandsfähig, Festigkeit etwa 5,5 N/mm², weist gute Schall- und Wärmedämmung auf und kann wie eine übliche Preßspanplatte leicht geschnitten, gehobelt und geschliffen werden.

Anschließend kann - wenn erforderlich - mit herkömmlichen Beschichtungsmethoden eine ein- oder beidseitige Beschichtung mit einem Duroplasten, Lack, Folie, Furniere od.dgl. aufgebracht werden.

### Beispiel 2:

Um eine im Vergleich zu Beispiel 1 mechanisch noch widerstandsfähigere und flüssigkeitsbeständigere Platte zu erreichen, hat es sich als vorteilhaft erwiesen, das zur Bindung verwendete Wasser zum Erweichen der Oberflächen der Granulatpartikel teilweise durch einen Duroplasten (Harnstoffharz) oder einen Styrol - Butadien Latex zu ersetzen.

Es wird sonst wie gemäß Beispiel 1 vorgegangen, wobei das eingesetzte Wasser teilweise durch Harnstoffharz (incl. Härter und Beschleuniger) in der Menge ersetzt wird, daß in der fertigen Platte 5 Masse-% Harz (Feststoff) enthalten sind. Die Preßtemperatur wird auf 180°C gesteigert und die Preßzeit auf 3 min erhöht, womit eine höhere Härtung des eingesetzten Harzes und damit eine Festigkeitssteigerung der neuartigen Partikel-Verbundplatte auf Stärkebasis erzielt wird.

Durch diese Vorgangsweise wurde die mechanische Belastbarkeit auf 6,5 N/mm² wesentlich erhöht, sodaß bei gleichem Schüttgewicht der Granulate eine in ihrer Dichte auf 230 kg/m³ erniedrigte Platte hergestellt werden konnte.

Nach der kurzen Preßzeit konnte schon eine völlig strukturfeste Platte entformt, und deren Nachtrocknung verringerte sich auf ein Minimum von etwa 0,5 min.

Als Folge der höheren Preßtemperatur wurde auch die Oberflächenbeschaffenheit in Hinblick auf Glattheit und Geschlossenheit wesentlich verbessert.

### Beispiel 3:

3.1: Ein granuliertes, etwa sphärisch expandiertes Extrudat mit einem Durchmesser von 7 mm mit biologisch abbaubaren Bestandteilen auf Basis von stärkehaltigem Pflanzenmaterial (Reismehl, 65 Masse-%) in Kombination mit Naturlatex, (35 Masse-%) mit einem Schüttgewicht von 60 kg/m³ wird zu einem Verpackungsmaterial in Form einer flachen Schachtel der Dimension 40 cm x 25 cm x 8 cm mit einer Wandstärke von 3 cm verpreßt.
   0,4 kg Granulat werden mit insgesamt 0,08 kg einer Tallharzemulsion auf Wasserbasis (Sacozell der Fa.Krems Chemie mit 40% Feststoffanteil) fein besprüht.
   Anschließend wird das Granulat in eine beheizte Preßform gebracht, wobei das Volumen des Granulates etwa 40% höher ist als das der fertigen Schachtel.
   Durch Schließen des Formwerkzeuges und Einbringen von erhitzter Luft (eventuell mit Wasserdampf konditioniert) durch mehrere Düsen in der Form werden die in Schüttung vorliegenden Granulatpartikel an ihrer Oberfläche sehr rasch in dünner Schicht in ein Schmelze-Gel übergeführt, also klebefähig und unter Wirkung der sich schließenden Preßform aneinander gesintert, wobei die Verbundflächen insgesamt 30% der Gesamtoberfläche der Granulatpartikel betragen. Anschließend wird entformt.
   Die Herstellungsbedingungen waren folgende:
   Temperatur der Form: 150°C
   Temperatur der eingebrachten Luft:130°C (eventuell zu 80% Wasserdampf gesättigt)
   Preßzeit: 1 min
   Durch die eingebrachte erhitzte Luft wird, da es sich um keinen geschlossenzelligen Formteil handelt, der Feuchtegehalt so (auf etwa 16%) gesenkt, daß sofort ein fertiger, stabiler Formteil mit einer Dichte von 85 kg/m³ erhalten wird.
3.2: Es konnte beobachtet werden, daß bei einem Einsatz von dichterem Vorgranulat (Schüttgewicht: 220 kg/m³) und höherer Durchlufttemperatur (155°C) eine weitere, also sekundäre, Expansion der Granulatpartikel stattfand und so ein Formteil entstand, der den Hohlraum vollständig ausfüllte, bei welchem zwischen den aneinandergesinterten Partikeln nur mehr wenig Zwischenvolumen verblieb und die Bindungsflächen der Partikel untereinander etwa 94% von deren Gesamtoberfläche betrug.

### Beispiel 4:

Um eine Platte herzustellen, die der Brandschutzklasse B1 zuzuordnen ist, wird ein Granulat verwendet, das, bezogen auf die Feststoffmenge, zu 35% mit Reismehl und zu 65% mit Halbhydrat-Gips gebildet ist.

Es wird sonst wie gemäß Beispiel 2 vorgegangen, wobei der Sprühflüssigkeit für das oberflächliche Erweichen der Granulatpartikel zusätzlich 5 Masse-% - berechnet auf das Endgewicht des Formteils - Borsäure zugegeben wird.

Die Herstellungsparameter sind mit jenen gemäß Beispiel 2 identisch.

Durch den relativ hohen Gipsanteil und die zusätzlich eingesetzte Borsäure können die Kriterien einer Zugehörigkeit zu der Brandschutzklasse B1 erfüllt werden, sodaß diese - im Vergleich zu konventionellen Gipsplatten "leichte", (Dichte: 200 kg/m³) wärme- und schalldämmende - Platte sich für den Hochbau hervorragend eignet.

## Patentansprüche

1. Konglomeratschaumkörper für die Verwendung als Konstruktionsmaterial im Bauwesen, als Verpackungsmaterial und als Isoliermaterial, dadurch gekennzeichnet, daß
er aus in der Struktur im wesentlichen belassenen Vor-Formkörpern aufgebaut ist, die an sich als Pelletschaumkörper für verlorenes Verpackungsfüllmaterial bekannt sind, aus wasserdampfexpandiertem Stärkegel bestehen und eigenmaterialschlüssig miteinander verbunden sind.

2. Formkörper nach Anspruch 1, dadurch gekennzeichnet, daß die ihn bildenden Vor-Formkörper mit einer Grundmatrix auf Basis von Stärke oder stärkehältigem Material gebildet sind, in welcher Partikel eines faserhältigen bzw. faserförmigen Materials biogenen, synthetischen und/oder mineralischen Ursprungs verteilt sind.

3. Formkörper nach Anspruch 1 oder 2, dadurch gekennzeichnet, daß die Vor-Formkörper eine Grundmatrix mit in ihr verteilten Partikeln aus mindestens einem Fasermaterial bzw. dessen Nebenkomponenten pflanzlichen Ursprungs aus der Gruppe der Hölzer, Pflanzenteile, Faserpflanzen und deren Fasern, Lignine, der nativen und modifizierten Cellulosen, Zellstoffe, Pappen, Papiere und Textilmaterialien auf Pflanzenfaser-Basis aufweisen, wobei das Fasermaterial originär, bearbeitet und/oder recycliert vorliegt.

4. Formkörper nach einem der Ansprüche 1 bis 3, dadurch gekennzeichnet, daß die Vor-Formkörper eine Grundmatrix mit einem Anteil von 5 - 85 Masse-% des pflanzlichen Fasermaterials bzw. von dasselbe enthaltenden Partikeln aufweist.

5. Formkörper nach einem der Ansprüche 1 bis 4, dadurch gekennzeichnet, daß die Vor-Formkörper eine Grundmatrix mit in ihr verteiltem feinteiligem anorganischem Material aus der Gruppe der Gipse, Kalke, Zemente, Leichtbaustoffe, Dämmstoffe, Keramikmaterialien, anorganischen Fasern, Füllstoffe und Pigmente aufweisen, wobei diese Materialien in Mengen von 5 - 70 Masse-% in der Stärkematrix vorliegen.

6. Formkörper nach einem der Ansprüche 1 bis 5, dadurch gekennzeichnet, daß das die Grundmatrix der Vor-Formkörper bildende Stärkematerial zumindest einen Modifikator aus der Gruppe der natürlichen oder synthetischen Latices, Kautschuke und Elastomere, Harze, Silikone, Paraffine, Wachse, Öle und Fette aufweist, wobei bei Vorhandensein von Elastomeren dieselben in Mengen von 1 - 40 Masse-% in der Stärkematrix enthalten sind.

7. Formkörper nach einem der Ansprüche 1 bis 6, dadurch gekennzeichnet, daß die aneinander gebundenen Vor-Formkörper aus einem in Granulat-Partikel geteilten Strang eines durch thermische und mechanische Energieeinleitung plastifizierten und direkt anschließend unter Porenbildung expandierten Stärke-Schmelze-Gels oder durch direkte Expansion von Stärkepflanzenteilchen oder Getreidekörnern gebildet sind.

8. Formkörper nach einem der Ansprüche 1 bis 7, dadurch gekennzeichnet, daß die ihn bildenden Vor-Formkörper über eine Vielzahl von zumindest punktuellen Berührungsstellen eigenmaterialschlüssig aneinander gebunden bzw. gesintert sind.

9. Formkörper nach einem der Ansprüche 1 bis 8, dadurch gekennzeichnet, daß die ihn bildenden Vor-Formkörper durch bzw. nach Überführen von deren Oberfläche bzw. Oberflächenschicht in einen gel- bzw. schmelzegel-artigen Zustand durch Einwirkung von erhöhter Temperatur, erhöhtem Druck und/oder eines Stärke-Quell- bzw. Anlösemittels aneinander gebunden sind.

10. Formkörper nach einem der Ansprüche 1 bis 9, dadurch gekennzeichnet, daß die Berührungsstellen der aneinander gebundenen, Vor-Formkörper durch auf sie von außen ausgeübte Kraft- bzw. Druckeinwirkung oder durch Eigenexpansion der Vor-Formkörper in einer Form zu Berührungsflächen erweitert sind.

11. Formkörper nach einem der Ansprüche 1 bis 10, dadurch gekennzeichnet, daß er mit einer Vielzahl von aneinander gebundenen Vor-Formkörpern mit im wesentlichen untereinander gleicher Gestalt und Dimension gebildet ist.

12. Formkörper nach einem der Ansprüche 1 bis 10, dadurch gekennzeichnet, daß er mit einer Vielzahl von aneinander gebundenen Vor-Formkörpern mit ausgewähltem Partikelgrößen-Spektrum gebildet ist.

13. Formkörper nach einem der Ansprüche 1 bis 12, dadurch gekennzeichnet, daß er mit Vor-Formkörpern mit zumindest zwei jeweils in sich einheitlichen Partikelgrößen gebildet ist, wobei mindestens eine Schicht oder ein Kernbereich mit aneinander gebundenen Vor-Formkörpern mit der höheren Partikelgröße mit mindestens einer Schicht oder mindestehs einem Randbereich mit aneinander gebundenen Vor-Formkörpern mit der geringeren Partikelgröße verbunden ist.

14. Formkörper nach einem der Ansprüche 1 bis 13, dadurch gekennzeichnet, daß deren Außen- bzw. Oberflächen-Schicht bzw. -Bereich enger bzw. dichter aneinander gebundene Vor-Formkörper aufweist als weiter innen liegende Schichten bzw. Bereiche oder daß deren Außen- bzw. Oberflächenschicht mit dicht aneinander gebundenen Vor-Formkörpern gebildet ist.

15. Formkörper nach einem der Ansprüche 1 bis 14, dadurch gekennzeichnet, daß auf die zumindest eine von dessen Außenseiten bzw. Außenschichten bildenden, aneinander gebundenen Vor-Formkörper eine Beschichtung oder Folie aufgebracht und an dieselben gebunden ist.

16. Formkörper nach einem der Ansprüche 1 bis 15, dadurch gekennzeichnet, daß er eine Dichte im Bereich von 25 - 1000 kg/m³ und/oder eine Bruchfestigkeit im Bereich von 3 - 15 N/mm² aufweist.

17. Verfahren zur Herstellung von Konglomeratschaumkörpern für die Verwendung als Konstruktionsmaterial im Bauwesen, als Verpackungsmaterial und als Isoliermaterial, dadurch gekennzeichnet, daß Pelletschaumkörper als Vor-Formkörper verwendet werden, die an sich z.B. als verlorenes Verpackungsfüllmaterial bekannt sind und aus einem wasserdampfexpandiertem Stärkegel hergestellt sind, wobei deren Oberfläche durch Besprühen mit einem Stärkelosungsmittel in dünner Schicht klebfähig gemacht und in einer Form unter Druck eigenmaterialschlüssig verbunden werden.

18. Verfahren nach Anspruch 17, dadurch gekennzeichnet, daß die Außenseiten der Vor-Formkörper vor deren Aneinanderbindung zum gewünschten Formkörper durch Auftrag oder Aufsprühen eines Stärke anquellenden oder anlösenden Fluids bzw. durch Wirkung der Eigenfeuchte der Stärke und erhöhter Temperatur jeweils allein oder in beliebiger Kombination miteinander in klebe- bzw. aneinandersinterfähigen Zustand versetzt werden.

19. Verfahren nach Anspruch 17 oder 18, bei welchem eine im wesentlichen als kleinteiliger Feststoff vorliegende, eine Gesamtfeuchte von 6 - 35 Masse-% aufweisende bzw. auf die genannte Feuchte gebrachte Grundmasse mit zumindest einem zumindest bei Extrusions-Temperatur und -Druck in eine Schmelze bzw. in ein Schmelze-Gel überführbaren Stärkematerial und einem kleinteiligen, biogenen faserhältigen und/oder faserförmigen, Material und/oder einem jeweils vorgesehenen anderen Zusatz bzw. Zuschlag gemäß einem der Ansprüche 2 bis 6 bei im wesentlichen simultanen Bedingungen von mechanischer Beanspruchung mit einer spezifischen mechanischen Energieeinleitung von 0,05 - 0,7 kWh/kg, erhöht Temperatur im Bereich von 5 - 250°C und erhöhtem Druck im Bereich von 15 - 500 bar unter Bildung einer Schmelze bzw. eines Schmelzegels des Stärkematerials einer Extrusion und gleichzeitig oder unmittelbar anschließend, einer Expansion, unter Mitwirkung der der Masse innewohnenden bzw. anhaftenden Feuchte einer Druckentlastung unterworfen wird, dadurch gekennzeichnet, daß der so erhaltene Material-Strang in eine Vielzahl von Vor-Formkörpern geteilt wird und diese in einer Formgebungseinrichtung bei Kraft- bzw. Druckeinwirkung von außen oder durch eine zweite gesamtvolumsbegrenzte Eigenexpansion bei erhöhter Temperatur und/oder Unterdruck aneinander gebunden werden.

20. Verfahren nach einem der Ansprüche 17 bis 19, dadurch gekennzeichnet, daß die Zufuhr von Wärmeenergie zu den aneinander zu bindenden Vor-Formkörpern mittels kapazitiver (Hochfrequenz-) oder Mikrowellen-Heizung erfolgt.

21. Verfahren nach einem der Ansprüche 17 bis 20, dadurch gekennzeichnet, daß die Zufuhr von Wärmeenergie zu den aneinander zu bindenden Vor-Formkörpern durch Einleiten von erhitzter Luft, mit Wasserdampf beladener Luft oder von Wasserdampf in ein die Körper umgebendes bzw. umschließendes Formgebungswerkzeug während der Druckeinwirkung auf die bzw. während einer Eigenexpansion der Vor-Formkörper unter Bildung eines gewünschten Formkörpers erfolgt.

## Claims

1. Conglomerate foam element for use as construction material in the building industry, as packaging material and as insulation material, characterized in that it is composed of preforms which remain essentially unchanged in structure and which are known per se as foam pellets for expendable package filling material, consist of steam-expanded starch gel and are bonded to one another tightly without foreign material.

2. Shaped element according to Claim 1, characterized in that the preforms which constitute it are formed with a base matrix which is based on starch or starch-containing material in which particles of fibre-containing or fibre-based material of biogenic, synthetic and/or mineral origin are distributed.

3. Shaped element according to Claim 1 or 2, characterized in that the preforms have a base matrix having, distributed therein, particles of at least one fibre material or its secondary components of vegetable origin from the group comprising woods, plant parts, fibrous plants and their fibres, lignins, natural and modified celluloses, pulps, boards, papers and textile materials based on plant fibres, the fibre material being present in original, processed and/or recycled form.

4. Shaped element according to any of Claims 1 to 3, characterized in that the preforms have a base matrix containing 5-85% by mass of the vegetable fibre material or of particles containing said material.

5. Shaped element according to any of Claims 1 to 4, characterized in that the preforms have a base matrix having, distributed therein, finely divided inorganic material from the group comprising the gypsums, limes, cements, lightweight building materials, insulating materials, ceramic materials, inorganic fibres, fillers and pigments, these materials being present in amounts of 5-70% by mass in the starch matrix.

6. Shaped element according to any of Claims 1 to 5, characterized in that the starch material forming the base matrix of the preforms contains at least one modifier from the group comprising the natural or synthetic lattices, rubbers and elastomers, resins, silicones, paraffins, waxes, oils and fats, elastomers, where present, being contained in amounts of 1-40% by mass in the starch matrix.

7. Shaped element according to any of Claims 1 to 6, characterized in that the preforms bonded to one another are formed from a granulated extrudate of a starch/melt gel plasticated by introduction of thermal and mechanical energy and directly thereafter expanded with pore formation, or are formed by direct expansion of starch plant particles or serial grains.

8. Shaped element according to any of Claims 1 to 7, characterized in that the preforms constituting it are bonded or sintered to one another tightly without foreign material, at a large number of contact sites which are at least point-like.

9. Shaped element according to any of Claims 1 to 8, characterized in that the preforms constituting it are bonded to one another by or after conversion of their surface or surface layer into a gel-like or melt gel-like state by the action of elevated temperature, high pressure and/or an agent which swells or superficially dissolves starch.

10. Shaped element according to any of Claims 1 to 9, characterized in that the contact sites of the preforms bonded to one another are extended to give contact areas by the action of force or pressure exerted from the outside or by expansion of the preforms themselves in a mould.

11. Shaped element according to any of Claims 1 to 10, characterized in that it is formed from a large number of preforms which are bonded to one another and have essentially the same shape and dimensions.

12. Shaped element according to any of Claims 1 to 10, characterized in that it is formed from a large number of preforms which are bonded to one another and have a selected particle size spectrum.

13. Shaped element according to any of Claims 1 to 12, characterized in that it is formed from preforms having at least two particle sizes, each of which is uniform in itself, at least one layer or one core region having preforms bonded to one another and possessing the larger particle size being bonded to at least one layer or at least one edge region having preforms which are bonded to one another and possess the smaller particle size.

14. Shaped element according to any of Claims 1 to 13, characterized in that its outer or surface layer or region has preforms which are bonded more closely or densely to one another than layers or regions further inside, or that its outer or surface layer is formed by preforms bonded densely to one another.

15. Shaped element according to any of Claims 1 to 14, characterized in that a coating or film is applied to the preforms bonded to one another and forming at least one of its outer surfaces or outer layers, and said coating or film is bonded to said preforms.

16. Shaped element according to any of Claims 1 to 15, characterized in that it has a density in the range of 25-1000 kg/m³ and/or a breaking strength in the range of 3-15 N/mm².

17. Process for the production of conglomerate foam elements for use as construction material in the building industry, as packaging material and as insulation material, characterized in that the preforms used are foam pellets which are known per se, for example, as expendable package filling material and are produced from a steam-expanded starch gel, their surface being rendered tacky by spraying with starch solvent in a thin layer and being bonded tightly in a mould under pressure without foreign material.

18. Process according to Claim 17, characterized in that the outer surfaces of the preforms are converted into a state capable of adhesive bonding or sintering with one another before said preforms are bonded to one another to give the desired shaped element by applying or spraying on a fluid which partially swells or superficially dissolves starch or by the action of the intrinsic moisture of the starch and elevated temperature, in each case alone or in any desired combination with one another.

19. Process according to Claim 17 or 18, in which a base material which is essentially present as finely divided solid and has a total moisture content of 6-35% by mass or has been brought to the stated moisture content and contains at least one starch material, which can be converted into a melt or into a melt gel at least at extrusion temperature and extrusion pressure, and finely divided, biogenic fibre-containing and/or fibrous material and/or another intended additive according to any of Claims 2 to 6 is subjected to extrusion under essentially simultaneous conditions of mechanical stress with a specific mechanical energy induction of 0.05-0.7 kWh/kg, elevated temperature in the range of 5-250°C and high pressure in the range of 15-500 bar with the formation of a melt or of a melt gel of the starch material, and simultaneously or immediately thereafter is subjected to expansion in the presence of the moisture contained in or adhering to the material, and is subjected to pressure relief, characterized in that the material extrudate thus obtained is divided into a large number of preforms, and these are bonded to one another in a shaping apparatus under the action of force or pressure from the outside or by means of a second expansion with limitation of total volume at elevated temperature and/or reduced pressure.

20. Process according to any of Claims 17 to 19, characterized in that the supply of heat energy to the preforms to be bonded to one another is effected by means of capacitive (high-frequency) or microwave heating.

21. Process according to any of Claims 17 to 20, characterized in that the supply of heat energy to the preforms to be bonded to one another is effected by passing in heated air, steam-laden air or steam in a shaping mould surrounding or enclosing the elements, during the action of pressure on the preforms or during expansion of the preforms, with formation of a desired shaped element.

## Revendications

1. Corps alvéolaire en conglomérat, pour l'utilisation comme matériau de construction dans le bâtiment-travaux publics, comme matériau d'emballage et comme matériau d'isolation, caractérisé en ce qu'il est constitué à partir de corps pré-moulés, pratiquement laissés en place dans la structure, connus en eux à titre de corps alvéolaire en boulettes pour du matériau perdu de remplissage d'emballage, en étant constitués d'un gel d'amidon expansé à la vapeur d'eau et en étant reliés ensemble avec liaison par le matériau proprement dit.

2. Corps de forme selon la revendication 1, caractérisé en ce que les corps pré-moulés le constituant sont constitués avec une matrice de base à base d'amidon ou d'un matériau contenant de l'amidon, dans lequel sont distribuées des particules d'un matériau contenant des fibres ou bien se présentant sous forme fibreuse, qui est d'origine biogène, synthétique et/ou minérale.

3. Corps de forme selon la revendication 1 ou 2, caractérisé en ce que les corps pré-moulés présentent une matrice de base avec des particules distribuées en elle et constituée d'au moins un matériau fibreux ou de ses composants annexes d'origine végétale et issus du groupe des bois, éléments végétaux, plantes fibreuses et autres fibres, lignine des celluloses natives et modifiées, substances alvéolaires, cartons, papier et matériaux textiles à base de fibres végétales, le matériau fibreux se présentant sous sa forme originelle, travaillée et ou recyclée.

4. Corps de forme selon l'une des revendications 1 à 3, caractérisé en ce que les corps pré-moulés ont une matrice de base ayant une proportion de 5 à 85 % en masse du matériau fibreux et végétal, respectivement, de particules contenant celui-ci.

5. Corps de forme selon l'une des revendications 1 à 4, caractérisé en ce que les corps de pré-forme présentent une matrice de base avec on matériau anorganique finement divisé et distribué en elle, issu du groupe ou gypse, chaux, ciments, matériaux de construction légers, substances d'amortissement, matériau céramique, fibre anorganique, charge et pigment, ces matériaux se présentant en des quantités allant de 5 à 70 % en masse dans la matrice d'amidon.

6. Corps de forme selon l'une des revendications 1 à 5, caractérisé en ce que la matériau à base d'amidon constituant la matrice de base des corps de pré-forme présente au moins un modificateur issu du groupe des latex, caoutchoucs et élastomères, résines, silicone, paraffine, cire, huiles et graisses, naturels ou synthétiques, ceux-ci étant contenus en des quantités de 1 à 40 % en masse dans la matrice d'amidon, en cas de présence d'élastomères.

7. Corps de forme selon l'une des revendications 1 à 6, caractérisé en ce que les corps de pré-forme liés les uns aux autres sont constitués d'un boudin divisé en granulats-particules, d'un gel amidon-produit fondu, plastifié par introduction d'énergie par voie thermique et mécanique et expansé directement, subséquemment, avec formation de pores, ou bien ont constitués par expansion directe des particules végétales contenant de l'amidon ou bien des grains de céréales.

8. Corps de forme selon l'une des revendications 1 à 7, caractérisé en ce que les corps de pré-forme le constituant sont liés les uns aux autres, respectivement frittés, avec liaison par le matériau proprement dit, par l'intermédiaire d'une pluralité de sites de contact au moins ponctuels.

9. Corps de forme selon l'une des revendications 1 à 8, caractérisé en ce que les corps de pré-forme le constituant sont liés les uns aux autres, par ou après un passage de leur surface ou de leur couche superficielle à un état du genre d'un gel ou gel fondu sous l'effet d'une température élevée, par action d'une température élevée, d'une pression élevée et/ou d'un produit gonflant ou mordant à base d'amidon.

10. Corps de forme selon l'une des revendications 1 à 9, caractérisé en ce que les points de contact des corps de pré-forme liés les uns aux autres sont agrandis, pour donner des surfaces de contact, par effet d'une force ou d'une pression exercée sur eux depuis l'extérieur ou bien par expansion propre des corps de pré-forme, dans un moule.

11. Corps de forme selon l'une des revendications 1 à 10, caractérisé en ce qu'il est constitué d'une pluralité de corps de pré-forme liés les uns aux autres, ayant une forme et des dimensions sensiblement égales ente eux.

12. Corps de forme selon l'une des revendications 1 à 10, caractérisé en ce qu'il est constitué par une pluralité de corps de pré-forme liés les uns aux autres et ayant un spectre de tailles de particules sélectionné.

13. Corps de forme selon l'une des revendications 1 à 12, caractérisé en ce qu'il est constitué par des corps de pré-forme ayant au moins deux tailles de particules unitaires en soi, au moins une couche ou une zone de noyau ayant des corps de pré-forme reliés les uns aux autres et ayant une plus grand taille de particule étant reliée à au moins une couche ou au moins une zone de bordure ayant des corps de pré-forme reliés les uns aux autres et ayant la taille de particule plus petite.

14. Corps de forme selon l'une des revendications 1 à 13, caractérisé en ce que leur couche ou zone extérieure ou superficielle présente des corps de pré-forme reliés les uns aux autres de façon plus étroite, respectivement plus dense que les couches ou zones situées plus à l'intérieur, ou bien en ce que leur couche extérieure ou superficielle est constituée par des corps de pré-forme reliés étroitement les uns aux autres.

15. Corps de forme selon l'une des revendications 1 à 14, caractérisé en ce que, sur les corps de pré-forme constituant au moins une de ses faces extérieures ou couches extérieures et reliés les uns aux autres, est appliqué un revêtement ou une feuille, que est relié(e) à celles-ci.

16. Corps de forme selon l'une des revendications 1 à 15, caractérisé en ce qu'il présente une masse volumique située dans la plage allant de 25 à 1000 kg/m³ et/ou une résistance à la rupture située dans la plage allant de 3 à 15 N/mm².

17. Procédé de fabrication de corps alvéolaire en conglomérat, pour l'utilisation comme matériau de construction dans le bâtiment-travaux publics, comme matériau d'emballage et comme matériau d'isolation, caractérisé en ce qu'on utilise comme corps pré-moulés des corps alvéolaire en boulettes, connus en eux pour du matériau perdu de remplissage d'emballage et fabriqués à partir d'un gel d'amidon expansé à la vapeur d'eau, sa surface étant rendue adhésive par aspersion avec un liant de l'amidon appliqué en couche mince, et reliés ensemble, par une liaison impliquant la matière même, en opérant dans un moule et sous pression.

18. Procédé selon la revendication 17, caractérisé en ce que, avant leur liaison les unes aux autres pour donner des corps de forme souhaités, les faces extérieures des corps de pré-forme sont portées à un état coliant ou susceptible d'être agglomérées les unes aux autres, par application ou pulvérisation sur elles d'un fluide faisant gonfler ou mettre en solution l'amidon, respectivement par action de l'humidité propre de l'amidon et d'une température élevée, chaque fois par un seul de ces moyens ou en une combinaison quelconque.

19. Procédé selon la revendication 17 ou 18, pour lequel une masse de base, se présentant essentiellement sous forme de produit solide en petits morceaux, ayant une humidité globale de 6 à 35 % en masse, respectivment étant ameneé à l'humidité citée, avec au moins un matériau à base d'amidon susceptible d'être transformé en un produit fondu ou un gel fondu, en opérant à une temperature et à une pression d'extrusion, et un matériau biogène se présentant en petits morceaux, contenant des fibres et/ou se présentant sous forme de fibres, et/ou avec un autre appoint ou additif respectivement prévu, selon l'une des revendications 2 à 6, avec des conditions pratiquement simultanées de sollicitation mécanique, avec une introduction d'énergie mécanique spécifique d'une valeur de 0,05 à 0,7 kWh/kg, à une température accrue dans la plage allant de 5 à 250°C et une pression accrue dans la plage allant de 15 à 500 bars, en constituant un produit fondu ou un gel fondu du matériau à base d'amidon, en étant soumis à une extrusion et, simultanément ou directement ensuite, à une expansion, avec coopération de l'humidité résidant dans la masse ou bien y adhérant et soumis à une décharge de pression, caractérisé en ce que le boudin de matériau ainsi obtenu est divisé en une pluralité de corps de pré-forme et ceux-ci sont reliés ensemble dans un dispositif de formage, avec action d'une force de pression s'exçant depuis l'extérieur ou bien par une deuxième expansion propre limitée pour son volume total, conduite à température accrue et/ou sous vide.

20. Procédé selon l'une des revendications 17 à 19, caractérisé en ce que l'apport d'énergie thermique aux corps de pré-forme à relier les uns aux autres s'effectue par chauffage capacitif (haute fréquence) ou par micro-ondes.

21. Procédé selon l'une des revendications 17 à 20, caractérisé en ce que l'apport d'énergie thermique aux corps de pré-forme à relier les uns aux autres est effectué par introduction d'air chauffé, d'air chargé avec de la vapeur d'eau ou bien de vapeur d'eau dans un outil de formage entourant ou enclosant les corps, tandis que l'effet de la pression sur ou pendant une expansion propre des corps de pré-forme s'effectue avec formation d'un corps de forme souhaité.
